# EUROPÄISCHE PATENTSCHRIFT

(11) **EP 3 690 399 B1**
(45) Veröffentlichungstag und Bekanntmachung des Hinweises auf die Patenterteilung: **10.08.2022**
(21) Anmeldenummer: 20151119.3
(22) Anmeldetag: 10.01.2020
(51) Int. Cl.: G01C 21/00, G01C 21/32

(54) **ENTFERNEN VON OBJEKTEN AUS EINER DIGITALEN STRASSENKARTE**
REMOVAL OF OBJECTS FROM A DIGITAL ROADMAP
SUPPRESSION D'OBJETS D'UNE CARTE ROUTIÈRE NUMÉRIQUE

(30) Priorität: 14.01.2019 DE 102019200347
(43) Veröffentlichungstag der Anmeldung: 05.08.2020
(73) Patentinhaber: Continental Automotive Technologies GmbH, 30165 Hannover (DE)
(72) Erfinder: SENNINGER, Dominik, 81737 München (DE); PIETSCH, Holger, 81737 München (DE)
(74) Vertreter: Continental Corporation

(56) Entgegenhaltungen:
- WO-A1-2018/230852
- DE-A1-102016 214 027
- US-A1- 2017 010 115

## Beschreibung

Die Erfindung betrifft ein Backend für ein Objektaktualisierungssystem zum Entfernen von Objekten, welche in einer digitalen Straßenkarte vorhanden sind, ein Fahrzeug für ein Objektaktualisierungssystem, ein Objektaktualisierungssystem, ein Verfahren zum Entfernen von Objekten, welche in einer digitalen Straßenkarte vorhanden sind, ein Programmelement und ein computerlesbares Medium.

Fahrzeuge werden zunehmend mit Fahrerassistenzsystemen ausgerüstet, welche den Fahrer bei der Durchführung von Fahrmanövern unterstützen. Ferner werden zunehmend Fahrzeuge mit hoch- oder vollautomatischen Fahrfunktionen ausgerüstet. Für diese hoch- oder vollautomatischen Fahrfunktionen sind hoch präzise digitale Straßenkarten erforderlich, um eine sichere und verlässliche Navigation der Fahrzeuge sicherzustellen und Objekte, wie Verkehrszeichen oder Fahrbahnmarkierungen, zu erkennen. Ferner müssen diese digitalen Straßenkarten stets den aktuellen Stand der Straßen und Verkehrszeichen aufweisen, um die hoch- oder vollautomatischen Fahrfunktionen zu ermöglichen. Des Weiteren weisen heutige Fahrzeuge eine hohe Anzahl an Sensoren zur Erfassung der Fahrzeugumgebung auf. Diese digitalen Straßenkarten auf dem aktuellen Stand zu halten stellt eine große Herausforderung dar.

Die US-Patentanmeldung US 2017/010115 A1 beschreibt ein System zur autonomen Navigation eines Fahrzeugs entlang eines Straßensegments. Der Prozessor des Systems kann so programmiert werden, dass er ermittelte lokale Eigenschaften mit einer vorher festgelegten Signaturfunktion für das Straßensegment vergleichen kann und so eine aktuelle Position des Fahrzeugs entlang einer vorab festgelegten Fahrbahnmodellkurve für das Straßensegment bestimmen kann.

Die deutsche Patentanmeldung DE 10 2016 214027 A1 beschreibt ein Verfahren zum Erfassen von Landmarken in einem Verkehrsumfeld einer mobilen Einheit, bei dem durch einen Laserscanner Datensätze erfasst werden, wobei die Datensätze Datenpunkte umfassen. Es werden Datenpunkte einer bestimmten Anzahl von Datensätzen als Ausgangsdaten gespeichert und anhand der Ausgangsdaten werden mittels einer Segmentierung Segmente bestimmt, wobei den Segmenten jeweils Datenpunkte zugeordnet sind.

Die internationale Patentanmeldung WO 2018/230852 A1 beschreibt eine Methode zur Identifizierung eines bewegten Objekts in einem dreidimensionalen Raum, wobei eine Kartenspeichereinheit benutzt wird für die Speicherung einer dreidimensionalen Karte, einschließlich der Höhe- und Positionsdaten eines Objekts, die durch ein Sensormodul berechnet sind.

Es ist eine Aufgabe der Erfindung, eine digitale Straßenkarte auf dem aktuellen Stand zu halten.

Diese Aufgabe wird durch den Gegenstand der unabhängigen Ansprüche gelöst. Ausführungsformen und Weiterbildungen sind den abhängigen Ansprüchen, der Beschreibung und den Figuren zu entnehmen.

Ein erster Aspekt der Erfindung betrifft ein Backend für ein Objektaktualisierungssystem zum Entfernen von Objekten, welche in einer digitalen Straßenkarte vorhanden sind, gemäß Anspruch 1.

Somit kann ein Objekt wieder aus der digitalen Straßenkarte entfernt werden, wenn es nicht durch das Backend in den Umfelddaten des Fahrzeugs erkannt wurde. Dadurch kann die digitale Straßenkarte, welche auf dem Backend gespeichert ist, stets auf dem aktuellen Stand gehalten werden. Mit anderen Worten kann die digitale Straßenkarte von überflüssigen und/oder veralteten Objekten befreit werden.

Es sei angemerkt, dass das Backend von einer Vielzahl von unterschiedlichen Fahrzeugen Umfelddaten empfangen kann. In jeder dieser empfangenen Umfelddaten kann das Backend Objekte erkennen und die digitale Straßenkarte entsprechend anpassen bzw. Objekte aus dieser entfernen.

Unter dem Begriff "digitale Straßenkarten" oder "digitale Karten" sind auch Straßenkarten für fortschrittliche Fahrerassistenzsysteme (ADAS, Advanced Driver Assistance System) zu verstehen, ohne dass eine Navigation stattfindet. Insbesondere können diese digitalen Straßenkarten in einem Backend gespeichert und erstellt werden. Es sei angemerkt, dass das Backend die dort gespeicherte digitale Straßenkarte auch wieder an die Fahrzeuge übertragen kann.

Ein Objekt, welches in einer digitalen Straßenkarte vorhanden ist, kann hierbei beispielsweise ein Verkehrszeichen, eine Leitplanke, eine Straßenmarkierung, eine Lichtsignalanlage, ein Kreisel, ein Zebrastreifen oder ein Geschwindigkeitshügel sein.

Unter Backend kann eine Recheneinheit verstanden werden, welche sich außerhalb des eigenen Fahrzeugs befindet, und welche für eine Vielzahl an Fahrzeugen oder Objekterkennungsvorrichtungen zur Verfügung steht. Ferner kann das Backend mehrere Recheneinheiten aufweisen, welche über verschiedenen Orte (Weltweit) verteilt sind. Das Backend kann beispielsweise ein Server oder eine Cloud sein, welche über das Internet oder ein anderes Netzwerk erreichbar ist bzw. mit welchem Daten ausgetauscht werden können.

Gemäß einer Ausführungsform der Erfindung weist jedes vorhandene Objekt der digitalen Straßenkarte einen Wahrscheinlichkeitswert für dessen Existenz auf. Das Backend ist dazu eingerichtet, den Wahrscheinlichkeitswert für ein in der digitalen Straßenkarte vorhandenes Objekt zu reduzieren, wenn dieses Objekt durch das Backend nicht in den von dem Fahrzeug erfassten Umfelddaten erkennbar ist bzw. erkannt wurde.

Somit wird ein Objekt der digitalen Straßenkarte nicht sofort aus dieser entfernt, wenn es einmal nicht durch das Backend in den Umfelddaten des Fahrzeugs erkannt wurde, sondern die Wahrscheinlichkeit für dessen Existenz wird entsprechend reduziert. Wenn dieser Wahrscheinlichkeitswert einen vordefinierten Grenzwert unterschreitet wird das Objekt aus der digitalen Straßenkarte entfernt. Der Wahrscheinlichkeitswert kann sich typischerweise zwischen 0 und 1 bewegen und wenn beispielsweise ein Objekt den Wahrscheinlichkeitswert von 50%, 60% oder 70% unterschreitet kann es aus der digitalen Straßenkarte entfernt werden.

Gemäß einer weiteren Ausführungsform der Erfindung ist das Backend dazu eingerichtet, ein in der digitalen Straßenkarte vorhandenes Objekt aus dieser zu entfernen, wenn der Wahrscheinlichkeitswert für dessen Existenz einen vordefinierten Grenzwert unterschreitet.

Das Backend kann ferner ein Objekt aus der digitalen Straßenkarte entfernen, wenn der Wahrscheinlichkeitswert für deren Existenz dieses Objekts unter einen vordefinierte Grenzwert fällt, z.B. 60%, oder wenn durch eine vordefinierte Anzahl an Fahrzeugen in der letzten Zeit das Objekt nicht erkannt wurde. Somit können "alte" Objekte, welche in der Realität nicht mehr vorhanden sind, aus der digitalen Straßenkarte entfernt werden.

Erfindungsgemäß ist das Backend dazu eingerichtet, anhand von Randbedingungen festzustellen, ob eine Erkennung des Objekts basierend auf den von dem Fahrzeug erfassten Umfelddaten möglich ist. Mit anderen Worten kann das Backend berücksichtigen, ob eine Erkennung möglich war. Dies kann insbesondere von Randbedingen abhängen, welche die Umfelddaten beeinflussen.

Gemäß einer Ausführungsform der Erfindung basieren die Randbedingungen für die mögliche Erkennung der Objekte auf von physikalischen Parametern einer in dem Fahrzeug verwendeten Erfassungseinheit. Es sei angemerkt, dass je nach eingesetzten Sensoren oder Sensortypen die physikalischen Parameter abweichen können. Diese physikalischen Parameter können beispielsweise mittels Metadaten von dem Fahrzeug an das Backend übertragen werden, sodass das Backend diese Parameter entsprechend berücksichtigen kann.

Gemäß einer Ausführungsform der Erfindung weisen die Randbedingungen wenigstens eines der folgenden auf, die Distanz zwischen dem Objekt und der Erfassungseinheit ist kleiner als die maximale Erkennungsweite der Erfassungseinheit, der Winkel zwischen der Fahrtrichtung und dem Objekt ist kleiner als der halbe Öffnungswinkel der Erfassungseinheit oder der Winkel zwischen der Fahrtrichtung und der Ausrichtung des Objektes ist kleiner als die Spezifikation der Erfassungseinheit. Ist eine dieser Randbedingungen verletzt, konnte das Backend das Objekt nicht in den Umfelddaten erkennen und ein Entfernen dieses Objekts aus der digitalen Straßenkarte entfällt.

Erfindungsgemäß umfassen die Randbedingungen die Uhrzeit, die Jahreszeit oder die Witterungsbedingungen der Umfelddaten des Fahrzeugs.

Somit können auch Randbedingungen berücksichtigt werden, wie beispielsweise eine tiefstehende Sonne, Nebel oder dichter Schneefall, welche die Sensoren der Erfassungseinheit beeinflussen können. Hierdurch kann das Backend besser und genauer die Erkennbarkeit bzw. den Wahrscheinlichkeitswert für die Existenz des Objekts beurteilen.

Ein weiterer Aspekt der Offenbarung betrifft ein Fahrzeug für ein Objektaktualisierungssystem mit einer Umfelddatenerfassungsvorrichtung. Die Umfelddatenerfassungsvorrichtung weist eine Erfassungseinheit, eine Positionierungseinheit und eine Sende-/ Empfangseinheit auf. Die Erfassungseinheit ist dazu eingerichtet, Umfelddaten von dem Fahrzeug zu erfassen. Die Positionierungseinheit ist dazu eingerichtet, die Position und den zurückgelegten Pfad des Fahrzeugs zu bestimmen. Die Sende-/ Empfangseinheit ist dazu eingerichtet, den zurückgelegten Pfad und die entlang dieses Pfades erfassten Umfelddaten an das Backend zu übertragen.

Die Erfassungseinheit kann verschiedene Sensoren, wie beispielsweise eine Kamera, einen Lidarsensor, einen Radarsensor oder einen Ultraschallsensor aufweisen. Des Weiteren können diese Sensoren bereits im Fahrzeug vorhanden sein.

Die Sende-/ Empfangseinheit kann die Daten an das Backend kabellos, über die Luft (over the air), übertragen. Die kabellose Übertragung bzw. der kabellose Empfang der Daten kann per Bluetooth, WLAN (z. B. WLAN 802.11a/b/g/n/ac oder WLAN 802.11p), ZigBee oder WiMax oder aber auch mittels zellulärer Funksysteme wie GPRS, UMTS, LTE oder 5G erfolgen. Es ist auch die Verwendung anderer Übertragungsprotokolle möglich. Die genannten Protokolle bieten den Vorteil der bereits erfolgten Standardisierung.

Bei dem Fahrzeug handelt es sich beispielsweise um ein Kraftfahrzeug, wie Auto, Bus oder Lastkraftwagen, oder aber auch um ein Schienenfahrzeug, ein Schiff, ein Luftfahrzeug, wie Helikopter oder Flugzeug, oder beispielsweise um ein Fahrrad. Weiterhin sei darauf hingewiesen, dass im Kontext der vorliegenden Erfindung GPS für die Positionierung der Positionierungseinheit stellvertretend für sämtliche Globale Navigationssatellitensysteme (GNSS) steht, wie z.B. GPS, Galileo, GLONASS (Russland), Compass (China), IRNSS (Indien).

An dieser Stelle sei darauf hingewiesen, dass die Positionsbestimmung des Fahrzeugs auch über eine Zellpositionierung erfolgen kann. Dies bietet sich insbesondere bei der Verwendung von GSM-, UMTS- oder LTE-Netzen an. Ein weiterer Aspekt der Erfindung betrifft ein Objektaktualisierungssystem zum Entfernen von Objekten, welche in einer digitalen Straßenkarte vorhanden sind. Das Objektaktualisierungssystem weist ein vorhergehend und nachfolgend beschriebenes Backend und ein vorhergehend und nachfolgend beschriebenes Fahrzeug mit einer Umfelddatenerfassungsvorrichtung auf.

Ein weiterer Aspekt der Erfindung betrifft ein Verfahren zum Entfernen von Objekten, welche in einer digitalen Straßenkarte vorhanden sind, gemäß Anspruch 7.

Zwischen einzelnen Schritten kann auch eine längere Zeitspanne liegen. Ein weiterer Aspekt der Erfindung betrifft ein Programmelement, das, wenn es auf einem Backend ausgeführt wird, das Backend anleitet, die vorhergehend und nachfolgend beschriebenen Verfahrensschritte für das Backend durchzuführen oder zumindest die Verfahrensschritte des Empfangens, des Erkennens und des Entfernens durchzuführen.

Ein weiterer Aspekt der Erfindung betrifft ein computerlesbares Medium, auf dem ein Programmelement gespeichert ist, das, wenn es auf einem Backend ausgeführt wird, das Backend anleitet, die vorhergehend und nachfolgend beschriebenen Verfahrensschritte für das Backend durchzuführen oder zumindest die Verfahrensschritte des Empfangens, des Erkennens und des Entfernens durchzuführen.

Weitere Merkmale, Vorteile und Anwendungsmöglichkeiten der Erfindung ergeben sich aus der nachfolgenden Beschreibung der Ausführungsbeispiele und der Figuren.

Die Figuren sind schematisch und nicht maßstabsgetreu. Sind in der nachfolgenden Beschreibung der Figuren gleiche Bezugszeichen angegeben, so bezeichnen diese gleiche oder ähnliche Elemente.
Fig. 1 zeigt ein Blockdiagramm eines Objektaktualisierungssystems gemäß einer Ausführungsform der Erfindung.
Fig. 2 zeigt eine schematische Darstellung von Umfelddaten mit einem Objekt gemäß einer Ausführungsform der Erfindung.
Fig. 3 zeigt ein Fahrzeug mit einer Umfelddatenerfassungsvorrichtung gemäß einer Ausführungsform der Erfindung.
Fig. 4 zeigt ein Flussdiagramm für ein Verfahren zum Entfernen von Objekten, welche in einer digitalen Karte im Backend vorhanden sind, gemäß einer Ausführungsform der Erfindung.

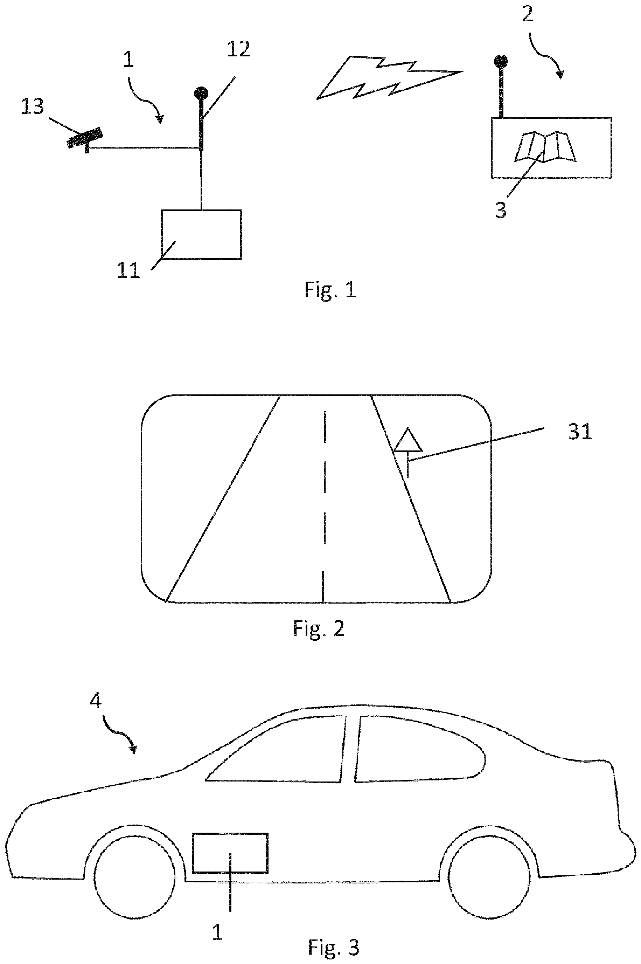

Fig. 1 zeigt ein Blockdiagramm eines Objektaktualisierungssystems. Das Objektaktualisierungssystem weist eine Umfelddatenerfassungsvorrichtung 1 und ein Backend 2 auf. Die Umfelddatenerfassungsvorrichtung 1 weist ihrerseits eine Positionierungseinheit 11, eine Sende-/ Empfangseinheit 12 und eine Erfassungseinheit 13 auf. Die Umfelddatenerfassungsvorrichtung 1 ist vorteilhafterweise in einem Fahrzeug verbaut, sodass diese Umfelddaten des Fahrzeugs und Umfelddaten entlang des Pfades des Fahrzeugs erfassen kann. Die Umfelddatenerfassungsvorrichtung 1 und das Backend 2 können miteinander Daten austauschen, insbesondere Umfelddaten, dies kann beispielsweise drahtlos über Mobilfunknetze geschehen. Auf dem Backend 2 kann eine digitale Straßenkarte 3 gespeichert sein, welche mehrere Objekte aufweist. Das Backend 2 kann die von der Umfelddatenerfassungsvorrichtung 1 erfassten Umfelddaten des Fahrzeugs empfangen. Hierzu kann die Umfelddatenerfassungsvorrichtung 1 die Sende-/ Empfangseinheit 13 anleiten die Umfelddaten an das Backend 2 zu senden. Das Backend 2 kann die empfangenen Umfelddaten des Fahrzeugs auswerten und in diesen Objekten erkennen. Diese erkannten Objekte kann das Backend 2 mit den in der digitalen Straßenkarte 3 vorhandenen Objekten vergleichen. Ein Objekt, welches in der digitalen Straßenkarte 3 vorhanden ist, jedoch nicht durch das Backend 2 in den von dem Fahrzeug gesendeten Umfelddaten erkannt werden konnte, kann durch das Backend 2 aus der digitalen Straßenkarte 3 entfernt werden. Hierdurch können Objekte aus der digitalen Straßenkarte wieder entfernt werden, sodass diese stets auf dem aktuellen Stand ist. Ferner kann jedes Objekt in der digitalen Straßenkarte 3 ein Wahrscheinlichkeitswert für dessen Existenz aufweisen. Mit anderen Worten, einen Wert welcher angibt mit welcher Wahrscheinlichkeit dieses Objekt tatsächlich (in Realität) existiert. Das Backend 2 kann in diesem Fall den Wahrscheinlichkeitswert für das Objekt reduzieren, wenn dieses Objekt nicht in den vom Fahrzeug erfassten Umfelddaten durch das Backend 2 erkennbar ist. Ferner, sobald ein vordefinierter Grenzwert des Wahrscheinlichkeitswertes (z.B. 60%, 70 % oder 80%)für die Existenz eines gewissen Objektes unterschritten ist, kann dieses aus der digitalen Straßenkarte entfernt werden.

Das Backend 2 berücksichtigt erfindungsgemäß Randbedingungen, und bevorzugt ferner weitere Parameter, bei der Erkennung von Objekten in den vom Fahrzeug erfassten Umfelddaten, um festzustellen, ob überhaupt eine Erkennung möglich war. Beispielsweise kann die Distanz zwischen dem zu erkennenden Objekt und dem Fahrzeug größer sein als die maximale Sichtweite des Sensors, somit kann das Backend 2 ein Objekt in diesen Umfelddaten nicht erkennen. Daraus folgt, dass in diesem Fall das Objekt nicht aus der digitalen Straßenkarte entfernt wird, da eine Erkennung gar nicht möglich war. Weitere Randbedingungen können sein, dass der Winkel zwischen Fahrtrichtung und dem Objekt (31) kleiner ist als der halbe Öffnungswinkel der Erfassungseinheit (13), oder dass der Winkel zwischen der Fahrtrichtung und der Ausrichtung des Objektes (31) kleiner ist als die Spezifikation der Erfassungseinheit (13). Mit anderen Worten kann es sich hierbei um physikalische Eigenschaften des jeweiligen eingesetzten Sensors bzw. Sensortyps handeln. Somit sei angemerkt, dass diese Eigenschaften von dem jeweiligen Sensor abhängen und mittels Metadaten an das Backend übertragen werden können, sodass dieses die Randbedingungen entsprechend bewerten kann. Des Weiteren können auch weiter Randbedingungen wie Uhrzeit, Jahreszeit oder Witterung berücksichtigt werden. Beispielsweise kann eine Kamera als Sensor bei Nebel, direkter Sonneneinstrahlung oder Schneetreiben keine geeigneten Bilddaten erfassen, sodass sich die maximale Erkennungsdistanz für Objekte reduziert.

In einer weiteren Ausführungsform kann das Backend 2, wenn es ein neues Objekt zu der digitalen Straßenkarte hinzufügen soll, die bereits auf dem Backend 2 vorhandenen Umfelddaten von früheren Fahrten bzw. von anderen Fahrzeugen durchsuchen und hierbei überprüfen, ob dieses neue Objekt bereits in vorherigen Umfelddaten von Fahrzeugen vorhanden war. War das Objekt bereits in früheren Umfelddaten vorhanden kann dies zu einem höheren Wahrscheinlichkeitswert der Existenz für dieses Objekt führen. Mit anderen Worten kann das Backend 2 in die Vergangenheit sehen und gezielt ältere Umfelddaten nach gewissen Objekten durchsuchen.

Es sei angemerkt, dass das Backend 2 eine Speichereinheit und eine Recheneinheit aufweisen kann. Ferner kann das Backend 2 verteilt über mehrere Standorte sein. Auch kann das Backend 2 über das Internet oder ein anderes Computernetzwerk erreichbar sein, z.B. als Cloud. Des Weiteren sei angemerkt, dass das Backend von einer Vielzahl von unterschiedlichen Fahrzeugen Umfelddaten erhalten und auswerten kann.

Ferner kann das Backend 2 Daten, wie die aktuelle digitale Straßenkarte 3, an die Umfelddatenerfassungsvorrichtung 1 übertragen. Für den Datenaustausch kann insbesondere die Sende-/ Empfangseinheit 12 der Umfelddatenerfassungsvorrichtung 1 genutzt werden. Die Erfassungseinheit 13 kann dazu eingerichtet sein, Umfelddaten zu erfassen, insbesondere kann die Erfassungseinheit Umfelddaten eines Fahrzeugs mittels verschiedener Sensoren erfassen. Die Erfassungseinheit 13 kann beispielsweise eine Kamera, eine Stereokamera, ein Lidar-, ein Radar-, ein Ultraschallsensor oder eine Kombination aus diesen sein. Die Erfassungseinheit 13 kann zeitlich aufeinanderfolgende Umfelddaten erfassen, z.B. ein Video oder mehrere einzelne aufeinanderfolgende Bilder (Frames). Die Positionierungseinheit 11 kann dazu eingerichtet sein, die Position der Umfelddatenerfassungsvorrichtung 1 des Fahrzeugs und den zurückgelegten Pfad des Fahrzeugs zu erfassen. Beispielsweise kann die Positionierungseinheit 11 ein GPS-Sensor sein.

Ein Objekt kann hierbei beispielsweise ein Verkehrszeichen, eine Leitplanke, eine Straßenmarkierung, eine Lichtsignalanlage, ein Kreisel, ein Zebrastreifen oder ein Geschwindigkeitshügel sein.

Die Übertragung der Daten durch die Sende-/ Empfangseinheit 12 an das Backup 2 kann sowohl kontinuierlich als auch abschnittweise, also zu bestimmen Zeitpunkten, z.B. jede Minute, erfolgen.

Fig. 2 zeigt ein beispielhaftes Bild der Umfelddaten. Hierbei ist eine Straße dargestellt. Am Rand dieser Straße befindet sich ein Verkehrszeichen, welches durch das Backend als Objekt 31 erkannt wird. Dieses Bild, die Position und der zurückgelegte Pfad des Fahrzeugs können an das Backend übertragen werden, welches wiederum das Objekt 31 in den Umfelddaten erkennt und die digitale Straßenkarte entsprechend anpasst bzw. ein nicht in den Umfelddaten enthaltenes Objekt aus der digitalen Straßenkarte entfernt.

Fig. 3 zeigt ein Fahrzeug 4 mit einer Umfelddatenerfassungsvorrichtung 1. Diese Umfelddatenerfassungsvorrichtung 1 kann Umfelddaten um das Fahrzeug 4 herum erfassen. Ferner kann die Umfelddatenerfassungsvorrichtung 1 die erfassten Umfelddaten an das Backend übertragen. Des Weiteren können eine Vielzahl von Fahrzeugen 4 mit der beschriebenen Umfelddatenerfassungsvorrichtung 1 Umfelddaten erfassen und an das Backend übertragen.

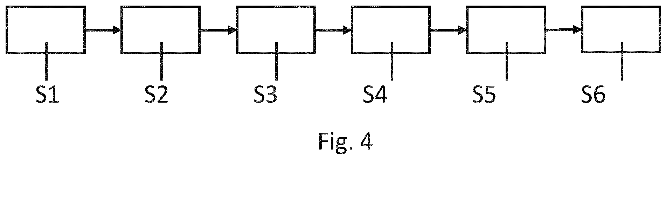

Fig. 4 zeigt ein Flussdiagramm für ein Verfahren zum Entfernen von Objekten, welche in einer digitalen Straßenkarte vorhanden sind. In einem ersten Schritt S1 können Umfelddaten durch eine Erfassungseinheit einer Umfelddatenerfassungsvorrichtung eines Fahrzeugs erfasst werden. In einem Schritt S2 kann die Position der erfassten Umfelddaten und der zurückgelegte Pfad des Fahrzeugs bestimmt werden, sodass Umfelddaten entlang des zurückgelegten Pfades vorliegen. Dieser zurückgelegte Pfad und die entlang dieses Pfades erfassten Umfelddaten können in Schritt S3 von einer Sender-/ Empfangseinheit der Umfelddatenerfassungsvorrichtung des Fahrzeugs an ein Backend gesendet bzw. übertragen werden. In Schritt S4 kann das Backend die gesendeten Umfelddaten empfangen. Anschließend kann das Backend in Schritt S5 Objekte in diesen empfangenen Umfelddaten erkennen. In einem Schritt S6 kann das Backend ein in der digitalen Straßenkarte vorhandenes Objekt aus dieser entfernen, wenn dieses Objekt durch das Backend nicht in den gesendeten Umfelddaten erkennbar ist.

## Patentansprüche

1. Backend (2) für ein Objektaktualisierungssystem zum Entfernen von Objekten (31), welche in einer digitalen Straßenkarte (3) vorhanden sind,
wobei auf dem Backend (2) die digitale Straßenkarte (3) mit vorhandenen Objekten (31) gespeichert ist; und
wobei das Backend (2) dazu eingerichtet ist, einen Pfad und entlang dieses Pfades erfasste Umfelddaten von einem Fahrzeug (4) zu empfangen und in diesen Umfelddaten Objekte (31) zu erkennen, und
wobei das Backend (2) dazu eingerichtet ist, ein in der digitalen Straßenkarte (3) vorhandenes Objekt (31) aus dieser zu entfernen, wenn dieses Objekt (31) durch das Backend (2) nicht in den von dem Fahrzeug (4) erfassten Umfelddaten erkennbar ist,
**dadurch gekennzeichnet, dass**
das Backend (2) dazu eingerichtet ist, anhand von Randbedingungen festzustellen, ob eine Erkennung des Objekts (31) basierend auf den von dem Fahrzeug (4) erfassten Umfelddaten möglich ist, und das Objekt (31) nur dann zu entfernen, wenn eine Erkennung möglich ist, wobei die Randbedingungen die Uhrzeit, die Jahreszeit oder die Witterungsbedingungen der Umfelddaten des Fahrzeugs (4) umfassen.

2. Backend (2) gemäß Anspruch 1,
wobei jedes vorhandene Objekt (31) der digitalen Straßenkarte (3) einen Wahrscheinlichkeitswert für dessen Existenz aufweist,
wobei das Backend (2) dazu eingerichtet ist, den Wahrscheinlichkeitswert für ein in der digitalen Straßenkarte (3) vorhandenes Objekt (31) zu reduzieren, wenn dieses Objekt (31) durch das Backend (2) nicht in den von dem Fahrzeug (4) erfassten Umfelddaten erkennbar ist.

3. Backend (2) gemäß Anspruch 2,
wobei das Backend (2) dazu eingerichtet ist, ein in der digitalen Straßenkarte (3) vorhandenes Objekt (31) aus dieser zu entfernen, wenn der Wahrscheinlichkeitswert für dessen Existenz einen vordefinierten Grenzwert unterschreitet.

4. Backend (2) gemäß einem der vorhergehenden Ansprüche, wobei die Randbedingungen für die mögliche Erkennung der Objekte (31) ferner auf von physikalischen Parametern einer in dem Fahrzeug verwendeten Erfassungseinheit (13) basieren.

5. Backend (2) gemäß einem der vorhergehenden Ansprüche, wobei die Randbedingungen ferner wenigstens eines der folgenden 2. aufweisen:
die Distanz zwischen dem Objekt (31) und der Erfassungseinheit (13) ist kleiner als die maximale Erkennungsweite der Erfassungseinheit (13), der Winkel zwischen der Fahrtrichtung und dem Objekt (31) ist kleiner als der halbe Öffnungswinkel der Erfassungseinheit (13) oder der Winkel zwischen der Fahrtrichtung und der Ausrichtung des Objektes (31) ist kleiner als die Spezifikation der Erfassungseinheit (13).

6. Objektaktualisierungssystem zum Entfernen von Objekten (31), welche in einer digitalen Straßenkarte (3) vorhanden sind, aufweisend:
- ein Backend (2) gemäß einem der Ansprüche 1 bis 5; und
- ein Fahrzeug (4) mit einer Umfelddatenerfassungsvorrichtung (1),
wobei die Umfelddatenerfassungsvorrichtung (1) aufweist:
- eine Erfassungseinheit (13);
- eine Positionierungseinheit (11); und
- eine Sende-/ Empfangseinheit (12),
wobei die Erfassungseinheit (13) dazu eingerichtet ist, Umfelddaten von dem Fahrzeug (4) zu erfassen,
wobei die Positionierungseinheit (12) dazu eingerichtet ist, die Position und den zurückgelegten Pfad des Fahrzeugs (4) zu bestimmen,
wobei die Sende-/ Empfangseinheit (12) dazu eingerichtet ist, den zurückgelegten Pfad und die entlang dieses Pfades erfassten Umfelddaten an das Backend (2) zu übertragen.

7. Verfahren zum Entfernen von Objekten, welche in einer digitalen Straßenkarte vorhanden sind, folgende Schritte aufweisend:
- Erfassen (S1) von Umfelddaten durch eine Erfassungseinheit;
- Bestimmen (S2) der Position der erfassten Umfelddaten und des zurückgelegten Pfades eines Fahrzeugs;
- Senden (S3) des zurückgelegten Pfades und der entlang dieses Pfades erfassten Umfelddaten von einer Sende-/ Empfangseinheit an ein Backend;
- Empfangen (S4) der gesendeten Umfelddaten durch das Backend;
- Feststellen anhand von Randbedingungen, ob eine Erkennung des Objekts (31) basierend auf den von dem Fahrzeug (4) erfassten Umfelddaten möglich ist,
wobei die Randbedingungen die Uhrzeit, die Jahreszeit oder die Witterungsbedingungen der Umfelddaten des Fahrzeugs (4) umfassen,
- Erkennen (S5) von Objekten in den empfangenen Umfelddaten durch das Backend; und
- Entfernen (S6) eines in der digitalen Straßenkarte vorhandenen Objektes aus dieser, wenn dieses Objekt durch das Backend nicht in den gesendeten Umfelddaten erkennbar ist, obwohl eine Erkennung des Objekts basierend auf den von dem Fahrzeug (4) erfassten Umfelddaten möglich ist.

8. Programmelement, das, wenn es auf einem Backend (2) ausgeführt wird, das Backend (2) anleitet, die Verfahrensschritte für das Backend gemäß Anspruch 7 durchzuführen.

9. Computerlesbares Medium, auf welchem das Programmelement gemäß Anspruch 8 gespeichert ist.

## Claims

1. Backend (2) for an object updating system for removing objects (31) which are present in a digital road map (3),
wherein the digital road map (3) with objects (31) which are present is stored on the backend (2); and
wherein the backend (2) is configured to receive a path and environmental data captured along this path from a vehicle (4) and to recognize objects (31) in these environmental data, and
wherein the backend (2) is configured to remove an object (31) which is present in the digital road map (3) from the latter if this object (31) cannot be recognized by the backend (2) in the environmental data captured by the vehicle (4),
**characterized in that**
the backend (2) is configured to determine, on the basis of boundary conditions, whether it is possible to recognize the object (31) on the basis of the environmental data captured by the vehicle (4) and to remove the object (31) only when recognition is possible, wherein the boundary conditions comprise the time, the season or the weather conditions of the environmental data of the vehicle (4).

2. Backend (2) according to Claim 1,
wherein each object (31) present in the digital road map (3) has a probability value for its existence,
wherein the backend (2) is configured to reduce the probability value for an object (31) present in the digital road map (3) if this object (31) cannot be recognized by the backend (2) in the environmental data captured by the vehicle (4).

3. Backend (2) according to Claim 2,
wherein the backend (2) is configured to remove an object (31) which is present in the digital road map (3) from the latter if the probability value for its existence undershoots a predefined limit value.

4. Backend (2) according to one of the preceding claims,
wherein the boundary conditions for the possible recognition of the objects (31) are also based on physical parameters of a capture unit (13) used in the vehicle.

5. Backend (2) according to one of the preceding claims,
wherein the boundary conditions also have at least one of the following:
the distance between the object (31) and the capture unit (13) is shorter than the maximum recognition range of the capture unit (13), the angle between the direction of travel and the object (31) is less than half the opening angle of the capture unit (13), or the angle between the direction of travel and the orientation of the object (31) is less than the specification of the capture unit (13).

6. Object updating system for removing objects (31) which are present in a digital road map (3), having:
- a backend (2) according to one of Claims 1 to 5; and
- a vehicle (4) having an environmental data capture apparatus (1), wherein the environmental data capture apparatus (1) has:
- a capture unit (13);
- a positioning unit (11); and
- a transmitting/receiving unit (12),
wherein the capture unit (13) is configured to capture environmental data of the vehicle (4),
wherein the positioning unit (12) is configured to determine the position of the vehicle (4) and the path covered by the vehicle (4),
wherein the transmitting/receiving unit (12) is configured to transmit the path covered and the environmental data captured along this path to the backend (2).

7. Method for removing objects which are present in a digital road map, having the following steps of:
- capturing (S1) environmental data by means of a capture unit;
- determining (S2) the position of the captured environmental data and the path covered by a vehicle;
- transmitting (S3) the path covered and the environmental data captured along this path from a transmitting/receiving unit to a backend;
- receiving (S4) the transmitted environmental data by means of the backend;
- determining, on the basis of boundary conditions, whether it is possible to recognize the object (31) on the basis of the environmental data captured by the vehicle (4),
wherein the boundary conditions comprise the time, the season or the weather conditions of the environmental data of the vehicle (4),
- recognizing (S5) objects in the received environmental data by means of the backend; and
- removing (S6) an object which is present in the digital road map from the latter if this object cannot be recognized by the backend in the transmitted environmental data even though it is possible to recognize the object on the basis of the environmental data captured by the vehicle (4).

8. Program element which, when executed on a backend (2), instructs the backend (2) to carry out the method steps for the backend according to Claim 7.

9. Computer-readable medium on which the program element according to Claim 8 is stored.

## Revendications

1. Terminal (2) destiné à un système d'actualisation d'objets afin de supprimer des objets (31) qui sont présents sur une carte routière numérique (3),
la carte routière numérique (3) pourvue des objets présents (31) étant mémorisées sur le terminal (2) ; et
le terminal (2) étant conçu pour recevoir un trajet et des données d'environnement acquises le long de ce trajet depuis un véhicule (4) et pour détecter des objets (31) dans ces données d'environnement, et
le terminal (2) étant conçu pour supprimer de la carte routière numérique (3) un objet (31) présent sur celle-ci si cet objet (31) n'est pas détectable par le terminal (2) dans les données d'environnement acquises par le véhicule (4),
**caractérisé en ce que**
le terminal (2) est conçu pour spécifier des conditions aux limites si une détection de l'objet (31) sur la base des données d'environnement acquises par le véhicule (4) est possible, et pour supprimer l'objet (31) uniquement si une détection est possible, les conditions aux limites comprenant l'heure, la saison ou les conditions météorologiques des données d'environnement du véhicule (4).

2. Terminal (2) selon la revendication 1,
chaque objet présent (31) de la carte routière numérique (3) ayant une valeur de probabilité de son existence,
le terminal (2) étant conçu pour réduire la valeur de probabilité d'un objet (31) présent sur la carte routière numérique (3) si cet objet (31) n'est pas détectable par le terminal (2) dans les données d'environnement acquises par le véhicule (4).

3. Terminal (2) selon la revendication 2,
le terminal (2) étant conçu pour supprimer de la carte routière numérique (3) un objet (31) présent sur celle-ci si la valeur de probabilité de son existence tombe au-dessous d'une valeur limite prédéfinie.

4. Terminal (2) selon l'une des revendications précédentes,
les conditions aux limites pour la détection possible des objets (31) étant en outre basées sur des paramètres physiques d'une unité d'acquisition (13) utilisée dans le véhicule.

5. Terminal (2) selon l'une des revendications précédentes,
les conditions aux limites comprenant en outre l'une au moins des caractéristiques suivantes :
la distance entre l'objet (31) et l'unité d'acquisition (13) est inférieure à la portée de détection maximale de l'unité d'acquisition (13), l'angle entre la direction de roulement et l'objet (31) est inférieur à la moitié de l'angle d'ouverture de l'unité d'acquisition (13) ou l'angle entre la direction de roulement et l'orientation de l'objet (31) est inférieur à la spécification de l'unité d'acquisition (13).

6. Système d'actualisation d'objets afin de supprimer des objets (31) présents sur une carte routière numérique (3), ledit système comprenant :
- un terminal (2) selon l'une des revendications 1 à 5 ; et
- un véhicule (4) comprenant un dispositif d'acquisition de données d'environnement (1), le dispositif d'acquisition de données d'environnement (1) comportant :
- une unité d'acquisition (13) ;
- une unité de positionnement (11) ; et
- une unité émettrice/réceptrice (12),
l'unité d'acquisition (13) étant conçue pour acquérir des données d'environnement du véhicule (4),
l'unité de positionnement (12) étant conçue pour déterminer la position et le trajet parcouru par le véhicule (4),
l'unité émettrice/réceptrice (12) étant conçue pour transmettre au terminal (2) le trajet parcouru et les données d'environnement acquises le long de ce trajet.

7. Procédé de suppression d'objets présents sur une carte routière numérique, ledit procédé comprenant les étapes suivantes :
- acquérir (S1) des données d'environnement par le biais d'une unité d'acquisition ;
- déterminer (S2) la position des données d'environnement acquises et le trajet parcouru par un véhicule ;
- envoyer (S3) le trajet parcouru et les données d'environnement acquises le long de ce trajet depuis une unité émettrice/réceptrice vers un terminal ;
- recevoir (S4) des données d'environnement transmises par le terminal ;
- spécifier en fonction des conditions aux limites si une détection de l'objet (31) sur la base des données d'environnement acquises par le véhicule (4) est possible, les conditions aux limites comprenant l'heure, la saison ou les conditions météorologiques des données d'environnement du véhicule (4),
- détecter (S5) par le biais du terminal des objets dans les données d'environnement reçues ; et
- supprimer (S6) de la carte routière numérique un objet présent sur celle-ci si cet objet n'est pas détectable par le terminal dans les données d'environnement transmises, bien que la détection de l'objet sur la base des données d'environnement acquises par le véhicule (4) soit possible.

8. Élément de programme qui, lorsqu'il est exécuté sur un terminal (2), ordonne au terminal (2) d'exécuter les étapes de procédé pour le terminal selon la revendication 7.

9. Support lisible par ordinateur sur lequel est mémorisé l'élément de programme selon la revendication 8.
